# FASCICULE DE BREVET EUROPEEN

(11) **EP 0 850 449 B1**
(45) Date de publication et mention de la délivrance du brevet: **14.11.2001**
(21) Numéro de dépôt: 96930213.2
(22) Date de dépôt: 05.09.1996
(51) Int. Cl.: G06F 13/28

(54) **PROCEDE DE TELECHARGEMENT RAPIDE DE FONCTIONS DANS UNE MEMOIRE VOLATILE**
VERFAHREN ZUR SCHNELLEN FERNLADUNG VON FUNKTIONEN IN EINEN FLÜCHTIGEN SPEICHER
METHOD FOR RAPID FUNCTIONALITY DOWNLOADING TO A VOLATILE MEMORY

(30) Priorité: 05.09.1995 FR 9510637
(43) Date de publication de la demande: 01.07.1998
(73) Titulaire: SCM Microsystems GmbH, 13600 La Ciotat (FR)
(72) Inventeur: LE ROUX, Jean, Yves, F-13600 Ceyreste (FR)
(74) Mandataire: Hautier, Jean-Louis
(86) Numéro de dépôt international: FR9601358
(87) Numéro de publication internationale: WO9709677

(56) Documents cités:
- EP-A- 0 598 541
- EP-A- 0 628 908
- MOTOROLA TECHNICAL DEVELOPMENTS, vol. 18, Mars 1993, ILLINOIS, US, pages 91-93, XP000349572 CANNON ET AL: "Downloadable pager functionality"
- IBM TECHNICAL DISCLOSURE BULLETIN, vol. 34, no. 4b, Septembre 1991, NEW YORK, US, pages 209-211, XP000189502 "Host channel micro-sequencer"
- IBM TECHNICAL DISCLOSURE BULLETIN, vol. 38, no. 2, Février 1995, NEW YORK, US, pages 517-519, XP000502673 "Data transfer mechanism for Personal Computer Memory Card International Association interface to digital signal processor"

## Description

La présente invention propose un procédé de téléchargement de fonctions entre un ordinateur personnel et une carte à mémoire.

La carte à mémoire utilisée est du type PCMCIA (Association internationale de carte à mémoire pour ordinateur personnel).

Il existe actuellement de nombreuses cartes PCMCIA commercialisées à travers le monde. Il s'agit de carte à mémoire, mais également des cartes modem/fax, de réseau (ethernet), de sécurité ou d'interface pour les cartes à puces. Ces autres cartes sont communément appelées cartes I/O (entrée/sortie).

Lorsque ces cartes doivent permettre le téléchargement de nouvelles fonctions ou d'améliorer les fonctions existantes, on leur adjoint une mémoire flash. Cette mémoire est donc associée aux constituants classiques d'une carte PCMCIA, à savoir une interface, un processeur et de l'électronique propre à chaque fonction spécifique.

Le document EP-A-0.419.005 concerne un appareil et un procédé pour charger un système d'entrée/sortie de base (BIOS) mémorisé dans une mémoire à accès direct d'un système d'ordinateur personnel. Le système d'ordinateur personnel comprend un processeur système, une carte système, une mémoire principale à accès aléatoire, une mémoire morte et au moins une mémoire à accès direct. La mémoire morte comporte une première zone de BIOS et des données représentant le type de processeur système et la configuration des entrées/sortie de la carte système. La première zone de BIOS lance le système et la mémoire à accès direct pour lire un bloc d'initialisation maître dans le système à partir de la mémoire à accès direct. Le bloc d'initialisation maître comporte un segment de données et un segment de code exécutable. Le segment de données comporte des données représentant le matériel système et une configuration du système qui est prise en charge par le bloc d'initialisation maître. La première zone de BIOS confirme que le bloc d'initialisation maître est compatible avec le matériel système en vérifiant que les données provenant du segment de données du bloc d'initialisation maître sont en accord avec le processeur système, la carte système, et la configuration d'entrée/sortie système. Si le bloc d'initialisation maître est compatible avec le matériel système, la première zone de BIOS dirige le processeur système pour qu'il exécute le segment de code exécutable du bloc d'initialisation maître. Le segment de code exécutable confirme que la configuration du système n'a pas changé et charge dans le reste de la zone de BIOS, de la mémoire à accès direct vers la mémoire à accès aléatoire. Le segment de code exécutable vérifie ensuite l'authenticité du reste de la zone de BIOS et dirige le processeur système pour qu'il commence à exécuter le BIOS maintenant dans la mémoire à accès aléatoire. L'exécution du BIOS dans la mémoire à accès aléatoire initialise ensuite le système d'exploitation pour commencer l'exploitation du système d'ordinateur personnel.

Ce document expose que les données chargées dans la mémoire tampon sont recopiées dans une mémoire à accès aléatoire. Ceci représente le cas des systèmes traditionnels où un programme est téléchargé dans une mémoire additionnelle.

Le document EP-A-0.598.541 propose un dispositif de commande de stockage externe programmable. Il nécessite une intervention minimale d'un microprocesseur et a plus d'étendue et de souplesse. Il comprend un circuit tampon qui emmagasine un programme de commande de transfert de données en addition aux données à transférer entre un côté et un moyen de stockage externe, un dispositif de commande qui lit à partir du circuit tampon vers le dispositif de commande en réponse à une instruction provenant de l'hôte. Le dispositif de commande commande le transfert de données entre l'hôte et le moyen de stockage externe indépendamment du microprocesseur tant que le microprocesseur peut exécuter d'autres tâches.

Le dispositif décrit utilise une zone programme "programmable" afin de gérer un transfert de données entre un serveur et un disque dur. Il n'y a pas de possibilité de transfert instantané d'un programme exécutable "à la volée" par la cible. Ainsi, un microprogramme est nécessairement chargé dans la mémoire tampon puis exécuté par un microprocesseur qui paramètre le séquenceur de transfert de données.

Le document EP-A-0.628.908 décrit un périphérique (PCMCIA) Association internationale de carte à mémoire d'ordinateur personnel, par exemple un modem, qui comprend une mémoire partagée servant d'interface à un ordinateur personnel. Cette interface à mémoire partagée présente la capacité de programmer facilement le périphérique PCMCIA soit dans l'usine, soit sur place. De plus, l'interface à mémoire partagée supprime le besoin d'avoir un code d'initialisation, résidant dans le périphérique PCMCIA. Finalement, l'interface permet de transférer des données introduites par l'utilisateur de l'ordinateur personnel, notamment un terminal de données, au modem PCMCIA avec un taux de transfert des données plus élevé que celui couramment disponible via le circuit intégré de réception/émission asynchrone universel des modems.

Ce document mentionne l'utilisation d'une mémoire programmable dans une carte PCMCIA chargée lors de l'initialisation, c'est-à-dire avant le démarrage de l'application. Il ne définit pas la possibilité d'un chargement pendant l'exécution d'une application, ni la possibilité d'avoir un chargement rapide de type à accès direct à la mémoire. Il y a donc deux phases. Une première phase d'initialisation où un programme d'initialisation doit être chargé avant l'utilisation du produit. Une seconde phase d'utilisation où la mémoire vive a double accès permet de transférer des données entre le serveur et le processeur. Ce produit est donc très "ouvert" et donc non sécurisé. Il ne peut pas y avoir de contrôle sur le contenu de ce programme. Par ailleurs, lors de la phase d'utilisation, il n'est pas mentionné que la mémoire vive est chargée par de nouvelles fonctions exécutables.

Le brevet EP-A-628.908 est bien l'état de la technique, car les fonctions exécutables sont résidentes en permanence dans le module PCMCIA, ou tout autre chose. Elles ne peuvent être modifiées qu'en faisant un "update". C'est-à-dire que l'on a besoin d'un outil spécial pour pouvoir les modifier. En d'autre terme, à l'intérieur, il y a une mémoire FLASH qui est reprogrammée.

Dans le procédé selon l'invention, les fonctions ne sont pas contenues dans le module PCMCIA mais elles sont dans le HOST (PC).

La différence fondamentale entre les deux procédés est donc dans la localité des fonctions du brevet EP-A-628.908 : dans le module en permanence (même si c'est "updatable"), dans le procédé selon l'invention : dans le host (les fonctions ne sont que de passage)) ce qui est le but de l'invention TELECHARG.

L'objet de l'invention consiste donc en un procédé permettant le chargement rapide de nouvelles fonctions dans une mémoire volatile.

Ce procédé permet donc une flexibilité accrue du fonctionnement des cartes PCMCIA, en effet toute nouvelle fonction peut être implantée ultérieurement par un simple ajout d'un logiciel externe.

De plus, la mémoire de type flash, qui est relativement onéreuse et non disponible à court terme, n'est plus indispensable au fonctionnement de ce type de carte à mémoire, ce qui permet des réductions substantielles de coût et d'encombrement.

Le procédé de téléchargement rapide de code de fonctions exécutables (F1) entre d'une part, un ordinateur personnel comportant au moins un processeur, une mémoire, une unité d'entrée-sortie faisant office de port et, d'autre part une carte à mémoire ou carte d'entrée sortie du type PCMCIA comportant une mémoire tampon, un processeur et un dispositif d'application , un interface PCMCIA est présent entre l'ordinateur et la carte PCMCIA est caractérisé par le fait qu'il permet un téléchargement rapide de fonction par accès direct au processeur cible (fonction Direct Processor Access DPA) de ladite carte PCMCIA qui peut donc la diriger vers le dispositif d'application pour exécution.

La mémoire tampon (Buffer) est accessible directement sur le processeur de la carte PCMCIA pour exécution par le processeur du fait que le canal de transmission de données est câblé de manière à ce qu'il soit directement exécutable par le processeur, ce canal de données permet un chargement de type DMA, le système hôte (un ordinateur personnel dans le cas concret d'une carte PCMCIA), accède directement à l'espace programme du processeur, on a alors un mécanisme DPA (direct processor access = accès direct au processeur) ; l'échange de code de fonction entre la RAM PC et la RAM interne s'apparente à un procédé DMA, ce procédé gère l'accès aux cases mémoires internes sans avoir à positionner l'adresse.

Il consiste à faire résider toutes les fonctions dans l'ordinateur personnel et non plus dans la carte PCMCIA et de les faire exécuter en temps voulu en utilisant le chargement rapide de type DPA ; on a même l'avantage de charger simultanément l'appel à l'exécution de la fonction, les arguments de ladite fonction et le code exécutable de cette fonction.

Le programme (BIOS) intégré dans le processeur (mémoire morte) permet de sécuriser l'utilisation du produit.

Lors de l'utilisation, une nouvelle fonction est chargée par l'intermédiaire d'un processus rapide entre le serveur et la mémoire vive puis exécuté "à la volée" par le processeur sous contrôle du programme.

Le programme est remplacé par un programme interpréteur ; dans ce cas, la fonction préchargée sera interprétée.

L'interface PCMCIA peut être remplacée par toute autre interface de même type telle que l'USB (Universal Serial Bus).

Les dessins ci-joints sont donnés à titre d'exemples indicatifs et non limitatifs. Ils représentent un mode de réalisation préféré selon l'invention. Ils permettront de comprendre aisément l'invention.

Les figures 1 à 5 représentent les différentes étapes du téléchargement d'une fonction dans le cas d'un ordinateur personnel et d'une carte à mémoire PCMCIA selon l'état de la technique.

Les figures 6 à 9 représentent les différentes étapes du téléchargement d'une fonction dans le cas d'un ordinateur personnel et d'une carte à mémoire PCMCIA selon l'invention.

La présente invention concerne essentiellement une mémoire tampon 3 qui permet l'accès direct au processeur 4 d'une carte à mémoire du type PCMCIA 2.

A l'inverse d'une mémoire tampon simple 13 qui est un espace auquel on accède en positionnant convenablement l'adresse de la case mémoire que l'on veut lire ou écrire simultanément avec les signes de lecture ou d'écriture, la mémoire tampon 3 selon l'invention, c'est-à-dire à accès direct, permet d'accéder aux différentes cases mémoire sans avoir à positionner l'adresse.

En général, le principe utilisé consiste en une autoincrémentation de l'adresse.

A chaque lecture, le pointeur de l'adresse se déplace "d'une unité".

Cette mémoire tampon à accès direct au processeur 4 de la carte 2 fonctionne de façon sensiblement similaire à une mémoire à accès direct qui est utilisée pour transférer des données entre un système et un autre.

Ce système de mémoire à accès direct est donc connecté sur les bus de données des deux systèmes concernés.

La mémoire à accès direct au processeur est elle utilisée pour transférer les fonctions exécutables par le second système c'est-à-dire la carte PCMCIA 2.

Le transfert se fait par un bus de données entre le premier système, c'est-à-dire l'ordinateur personnel 1, et le dispositif à accès direct 2.

La carte 2 va donc pouvoir voir le dispositif à accès direct sur son bus d'exécution.

Ladite carte 2 va donc pouvoir exécuter la fonction directement.

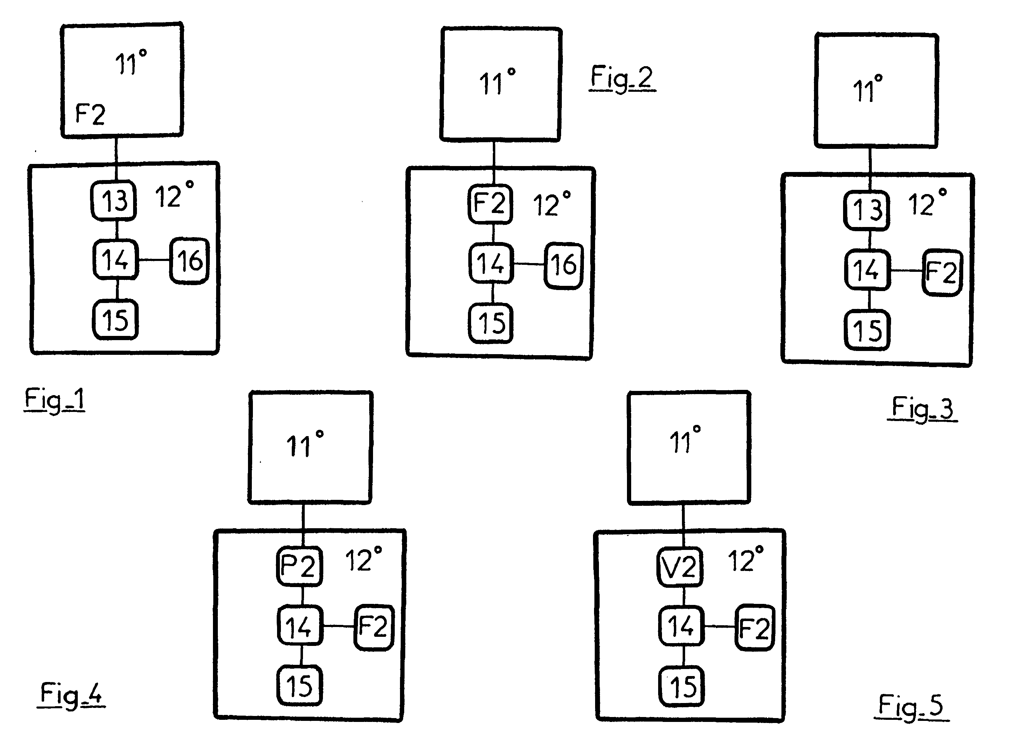

Si l'on s'intéresse maintenant aux figures, on peut mettre en évidence sur les figures 1 à 5 l'état actuel de la technique dans le domaine de la présente invention.

Le mode de réalisation représenté sur ces figures comporte un ordinateur personnel 11 qui est connecté à une carte à mémoire de type PCMCIA classique 12.

Cette carte 12 est donc essentiellement constituée par une mémoire tampon 13 de communication, un processeur 14, un dispositif d'application 15 et enfin, une mémoire flash 16.

Selon la figure 1, l'utilisateur veut exécuter une nouvelle fonction F2 qui l'introduit dans l'ordinateur personnel 11.

Selon la figure 2, la fonction F2 est transférée vers la mémoire tampon 13, transfert qui est associé au transfert du code de ladite fonction F2.

Selon la figure 3, la fonction F2 est ensuite transférée à la mémoire flash 16 via le processeur 14.

La figure 4 représente l'envoi de la demande d'exécution depuis la mémoire flash 16 de la fonction F2 avec les paramètres P2.

Ces paramètres P2 se retrouvent au niveau de la mémoire tampon 13.

Enfin, selon la figure 5, le processeur 14 interprète la commande reçue et exécute la fonction F2. Puis il renseigne l'ordinateur associé au dispositif d'application 15 de la bonne exécution de F2 en écrivant une valeur V2 dans la mémoire tampon 13.

Selon un mode préférentiel de réalisation, la fonction F2 est conservée en mémoire dans la mémoire flash 16, mais ceci n'est pas obligatoire.

Un des problèmes de ce dispositif selon l'état de la technique provient du fait que si plusieurs fonctions F sont chargées en mémoire flash 16, l'ensemble des codes exécutables peut dépasser la capacité de la mémoire. Il y a alors des risques d'effacement ou de saturation du système.

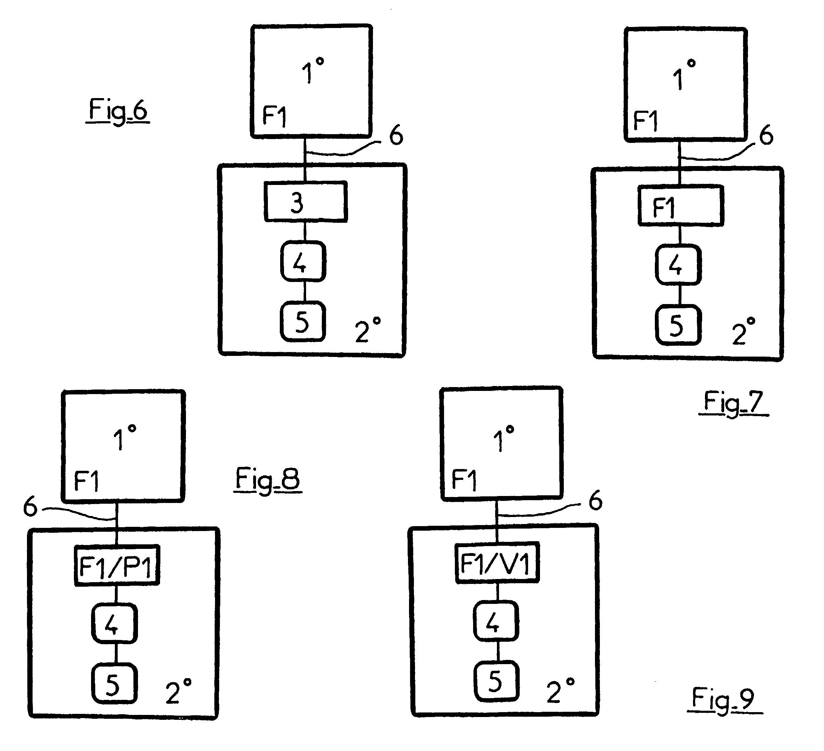

Selon les figures 6 à 9, la présente invention simplifie de manière importante le téléchargement d'une fonction.

Selon la figure 6, et de manière analogue à la figure 1, l'utilisateur charge la fonction F1 à l'intérieur d'un ordinateur personnel 1.

Selon la figure 7, cette fonction F1 est ensuite transmise via un canal de transmission de données 6, la fonction F1 provenant de l'ordinateur 1 en direction de la carte à mémoire de type PCMCIA 2 dont la structure est caractéristique.

Cette carte 2 comprend essentiellement trois éléments importants, à savoir la mémoire tampon 3 permettant l'accès direct au processeur 4 de la carte 2, le processeur 4 et enfin le dispositif d'application 5.

Selon la figure 7, la fonction F1 est donc transférée au niveau de la mémoire tampon 3 à accès direct simultanément avec les paramètres P1.

Selon la figure 8, le processeur 4 interprète le fait que la mémoire tampon à accès direct 3 est remplie par une fonction permettant son exécution directe par ce processeur 4. Il exécute alors F1 avec les paramètres P1.

La figure 9, enfin, décrit l'inscription de la valeur V1 après exécution de la fonction F1.

Ladite fonction F1 peut résider dans la mémoire tampon 3 au cas où il y aurait une deuxième exécution successive à réaliser. Néanmoins, chaque nouvelle fonction écrase la fonction précédente.

Le temps de chargement doit donc être rapide. Il faut donc un accès direct à mémoire de cette carte 2 pour l'ordinateur personnel 1 ainsi qu'un accès direct à exécution par le processeur 4.

Dans le mode de réalisation selon l'invention, la mémoire flash 16 n'est donc plus nécessaire.

Le cas traditionnel, utilisé dans le cadre d'une carte PCMCIA 12, nécessite le téléchargement d'une nouvelle fonction F2 par le canal de transmission de données, interprété par le processeur 14 de la carte 12 et ensuite écrit dans la mémoire flash 16.

L'exécution se fait alors dès que toute la fonction F2 est écrite dans ladite mémoire flash 16, et lorsque le processeur 14 reçoit la commande d'exécution par le canal de transmission de données.

Le cas traditionnel nécessite environ un temps de 1 à 2 secondes pour charger une fonction de 2 K octets.

Le mécanisme utilisé dans le cadre de l'invention utilise un principe dérivé du DMA (direct memory access = accès direct à la mémoire).

L'idée est de câbler le canal de transmission de données de manière à ce qu'il soit directement exécutable par le processeur.

Si ce canal de données permet un chargement de type DMA, le système hôte (un ordinateur personnel dans le cas concret d'une carte PCMCIA), peut alors accéder directement à l'espace programme du processeur, on a alors un mécanisme DPA (direct processor access = accès direct au processeur).

Par exemple, la spécification DVB (Digital Vidéo Broadcasting = Radio ou télédiffusion vidéo en numérique) élaborée en Europe en 1995 est une application particulière d'utilisation du standard PCMCIA qui définit notamment un mécanisme de transfert extrêmement rapide permettant d'écrire une mémoire tampon de données à une vitesse de l'ordre de 300 nanosecondes par octet.

Un chargement de 2 K octets prend alors un temps de 600 microsecondes.

Dans l'invention, cette mémoire tampon 3 étant exécutable directement par le processeur 4 interne, le téléchargement d'une nouvelle fonction F1 dont le code exécutable est de 2 K octets nécessite alors 600 microsecondes ce qui est négligeable par rapport aux deux secondes des systèmes traditionnels et également du temps d'exécution lui-même (qui est de l'ordre de 100 à 500 millisecondes dans le cas d'un accès à une carte à puce par exemple).

Ceci permet donc de faire résider toutes les fonctions dans l'ordinateur personnel et non plus dans la carte PCMCIA et de les faire exécuter en temps voulu en utilisant le chargement rapide de type DPA. On a même l'avantage de charger simultanément l'appel à l'exécution de la fonction, les arguments de ladite fonction et le code exécutable de cette fonction.

Le programme (BIOS) intégré dans le processeur (mémoire morte) permet de sécuriser l'utilisation du produit.

Lors de l'utilisation, une nouvelle fonction est chargée par l'intermédiaire d'un processus rapide entre le serveur et la mémoire morte puis exécuté "à la volée" par le processeur sous contrôle du programme.

Ce procédé a la particularité que le temps de transfert de cette fonction dans la mémoire vive est négligeable par rapport au temps d'exécution de la fonction elle-même.

### REFERENCES

1. Ordinateur personnel
2. Carte à mémoire de type PCMCIA
3. Mémoire tampon permettant l'accès direct au processeur 4 de la carte 2
4. Processeur de la carte 2
5. Dispositif d'application de la carte 2
6. Canal de transmission de données provenant de l'ordinateur 1 en direction de la carte 2
11. Ordinateur personnel
12. Carte à mémoire de type PCMCIA
13. Mémoire tampon de communication de la carte 12
14. Processeur de la carte 12
15. Dispositif d'application de la carte 12
16. Mémoire flash de la carte 12
F1. Exécution d'une nouvelle fonction au niveau de l'ordinateur 1 et de la carte 2
F2. Exécution d'une nouvelle fonction au niveau de l'ordinateur 11 et de la carte 12
P1. Paramètres de la commande d'exécution de F1
P2. Paramètres de la commande d'exécution de F2
V1. Valeur témoin de l'exécution de F1
V2. Valeur témoin de l'exécution de F2

## Revendications

1. Procédé de téléchargement de code de fonctions exécutables (F1) entre d'une part, un ordinateur comportant au moins un processeur, une mémoire, une unité d'entrée-sortie faisant office de port et, d'autre part une carte à mémoire ou carte d'entrée sortie du type PCMCIA (2) comportant une mémoire tampon (3), un processeur (4) et un dispositif d'application (5), une interface est présente entre l'ordinateur et la carte (2) PCMCIA **caractérisé par le fait qu'**on :
- utilise une mémoire tampon (3) du type à accès direct pour les transmissions du code de fonctions exécutables (F1) en provenance de l'ordinateur et en direction du processeur (4) ;
- charge le code de fonctions exécutables (F1) dans la mémoire tampon (3) depuis la mémoire de l'hôte ;
- transmet directement le code des fonctions exécutables (F1) au processeur (4) depuis la mémoire tampon (3) pour effectuer leur exécution ;
et **par le fait que** :
- le chargement du code des fonctions exécutables (F1) dans la mémoire tampon (3) est effectué par une écriture avec autoincrémentation de l'adresse des cases mémoire ;
- le processeur (4) lit les cases mémoire ainsi chargées par autoincrémentation de l'adresse ;
et **par le fait qu'**on n'utilise pas de mémoire flash dans la carte (2) PCMCIA.

2. Procédé de téléchargement selon la revendication 1 **caractérisé par le fait**
**que** le processeur (4) exécute le code des fonctions exécutables (F1) ainsi lu au fur et à mesure de son écriture dans la mémoire tampon (3), permettant un chargement et une exécution du code des fonctions exécutables (F2) à la volée.

## Patentansprüche

1. Verfahren zur Femladung der Code von ausführbaren Funktionen (F1) zwischen einerseits einem Computer mit mindestens einem Prozessor, einem Speicher, einer als Port dienender Eingangs-/Ausgangseinheit, und andererseits einer Karte mit Speicher oder Eingangs-/Ausganskarte des Typs PCMCIA (2) mit einem Pufferspeicher (3), einem Prozessor (4) und einer Anwendungs-Einrichtung (5) sowie einer Schnittstelle zwischen dem Computer und der Karte (2) PCMCIA, **dadurch gekennzeichnet, daß**
- für die Übertragungen des von dem Computer kommenden Codes von ausführbaren Funktionen (F1) in Richtung des Prozessors (4) ein Pufferspeicher (3) der Art mit direktem Zugang benutzt wird;
- der Code von ausführbaren Funktionen (F1) aus dem Speicher des Computers in den Pufferspeicher (3) geladen wird;
- der Code von ausführbaren Funktionen (F1) aus dem Pufferspeicher (3) direkt an den Prozessor (4) zu deren Ausführung übertragen wird;
und **dadurch gekennzeichnet, daß**
- das Laden des Codes von ausführbaren Funktionen (F1) in den Pufferspeicher (3) durch ein Schreiben mit automatischer Speichererhöhung der Adresse der Speicherfächer erfolgt;
- der Prozessor (4) die so geladenen Speicherfächer durch automatische Erhöhung der Adresse liest;
und ferner **dadurch gekennzeichnet, daß** in der Karte (2) PCMCIA kein Flash-Speicher benutzt wird.

2. Fernladungsverfahren gemäß Anspruch 1, **dadurch gekennzeichnet,**
**daß** der Prozessor (4) den gelesenen Code von ausführbaren Funktionen (F1) entsprechend seinem Schreiben in den Pufferspeicher (3) ausführt und damit ein Laden und eine Ausführung des Codes von ausführbaren Funktionen (F2) schnellstens ermöglicht.

## Claims

1. Process for downloading executable functionality codes (F1) between on the one hand a computer comprising at least a processor, a memory, an input-output unit acting as port, and on the other hand a smart card or input card of type PCMCIA (2) comprising a buffer memory (3), a processor (4) and an application device (5), an interface is present between the computer and PCMCIA card (2) **characterized by** the fact that:
- a buffer memory (3) of the type with direct access for the transmissions of the executable functionality codes (F1) from the computer to the processor (4) is used;
- the executable functionality code (F1) is loaded into the buffer memory (3) from the host memory;
- the executable functionality code (F1) is transmitted directly to the processor (4) from the buffer memory (3) in order to execute them;
and by the fact that:
- the executable functionality code (F1) is loaded into the buffer memory (3) by writing the memory boxes with autoincrementing of the address;
- the processor (4) reads the memory boxes thus loaded by autoincrementing the address;
and by the fact that no memory flash is used in the PCMCIA card (2).

2. Process for downloading according to claim 1 **characterized by** the fact that the processor (4) executes the executable functionality code (F1) thereby read progressively as written in the buffer memory (3), allowing loading and execution of the executable functionality code (F2) instantly.
